# FASCICULE DE BREVET EUROPEEN

(11) **EP 3 194 075 B1**
(45) Date de publication et mention de la délivrance du brevet: **13.11.2019**
(21) Numéro de dépôt: 15775764.2
(22) Date de dépôt: 15.09.2015
(51) Int. Cl.: B02C 17/08, B02C 17/14

(54) **ENSEMBLE POUR LE BROYAGE D'ÉCHANTILLONS BIOLOGIQUES**
EINHEIT ZUM SCHLEIFEN VON BIOLOGISCHEN PROBEN
UNIT FOR GRINDING BIOLOGICAL SAMPLES

(30) Priorité: 17.09.2014 FR 1458774
(43) Date de publication de la demande: 26.07.2017
(73) Titulaire: Bertin Technologies, 78180 Montigny-le-Bretonneux (FR)
(72) Inventeur: VALLAYER, Julien, F-78950 Gambais (FR); CHARPENTIER, Julien, F-92800 Puteaux (FR)
(74) Mandataire: Decobert, Jean-Pascal
(86) Numéro de dépôt international: PCT/FR2015/052463
(87) Numéro de publication internationale: WO 2016/042252

(56) Documents cités:
- EP-A2- 1 393 797
- WO-A2-2008/000962
- JP-A- 2001 178 444
- JP-A- 2013 107 024

## Description

La présente invention concerne un ensemble pour le broyage d'échantillons biologiques.

Les documents WO-A-2004/012851 et FR-A-2 872 233 divulguent un dispositif de broyage d'échantillons biologiques, comprenant un plateau formant un support de tubes contenant des échantillons à broyer et des moyens d'entraînement du plateau en mouvement de précession, le plateau présentant un axe dont la position varie en décrivant un cône lors du mouvement de précession.

Un tel dispositif comprend des paliers concentriques montés l'un à l'intérieur de l'autre pour le support et le centrage du plateau porte-tubes, ces paliers étant disposés entre une partie suspendue élastiquement de l'appareil et un arbre d'entraînement portant le plateau.

Le plateau est immobilisé en rotation autour de l'arbre d'entraînement de sorte que les tubes contenant les échantillons sont soumis à un mouvement alternatif curviligne à fréquence élevée et que les échantillons qu'ils contiennent sont broyés et homogénéisés par des microbilles, par exemple de verre ou de céramique, contenues avec les échantillons dans les tubes.

Ce type de broyage est très efficace et très rapide mais a pour inconvénient une augmentation assez importante de la température des échantillons dans les tubes. Même lorsque les tubes contenant les échantillons sont refroidis préalablement au broyage, la température des échantillons en fin de broyage peut atteindre ou dépasser des valeurs de l'ordre de 60 à 70° C, auxquelles certaines caractéristiques des échantillons sont modifiées de façon irréversible. C'est le cas par exemple des protéines dont l'activité est déterminée à la fois par leur séquence et par leur structure tridimensionnelle, cette structure étant détruite par chauffage.

Afin de remédier à cet inconvénient le document WO 2008/000962 divulgue un dispositif de broyage du type précité et comportant en outre des moyens de refroidissement des tubes comprenant une cloche fixée à l'intérieur d'un capot rabattable de l'appareil et des moyens d'amenée d'air froid à l'intérieur de la cloche.

Ces moyens de refroidissement permettent de maintenir les échantillons à une température de quelques degrés au-dessus de zéro en fin de broyage, de sorte que la structure tridimensionnelle des protéines contenues dans ces échantillons n'est pas altérée.

Il existe un besoin de pouvoir utiliser différents types de tubes avec un même dispositif de broyage, par exemple des tubes de volumes différents, tout en garantissant une efficacité maximale de broyage pour chaque type de tubes.

A cet effet, l'invention concerne un ensemble pour le broyage d'échantillons biologiques, comportant
- au moins deux tubes de volumes différents, aptes à être montés sur un support d'un dispositif de broyage, chaque tube comportant un espace interne ayant une hauteur selon l'axe du tube correspondant et étant destiné à contenir des échantillons à broyer,
- un dispositif de broyage comprenant un support apte à supporter lesdits au moins deux tubes différents, des moyens d'entraînement du support en mouvement de précession, le support présentant un axe dont la position varie en décrivant un cône, chaque tube étant soumis à un débattement défini par la projection, sur l'axe dudit cône, de la distance entre les positions extrêmes d'un même point du tube lors du mouvement de précession,
le dispositif de broyage et les tubes étant conçus de façon à ce que, pour chaque tube, le rapport d/h soit compris entre 0,55 et 1, de préférence entre 0,6 et 0,8 encore plus préférentiellement compris entre 0,6 et 0,7.

Des études réalisées par la Demanderesse ont permis d'établir qu'un tel rapport permet de garantir une efficacité maximale de broyage, quel que soit le type de tube utilisé.

On notera que les études précitées ont fait apparaître que l'efficacité est relativement constante sur un plateau situé entre 0,6 et 1. De préférence, on choisit de se placer au début du plateau, c'est-à-dire au débattement minimum (et donc au rapport d/h minimum permettant de fournir l'efficacité maximale), à savoir proche de 0,6. De cette manière, on réduit l'énergie nécessaire au broyage des échantillons et on évite toute dégradation des tubes et de l'appareil.

Lesdits au moins deux tubes peuvent comprendre au moins un premier tube dont le volume interne est compris entre 1 et 5 mL, de préférence de l'ordre de 2 mL.

En outre, lesdits au moins deux tubes peuvent comprendre au moins un deuxième tube dont le volume interne est compris entre 5 et 10 mL, de préférence de l'ordre de 7 mL.

De plus, lesdits au moins deux tubes peuvent comprendre au moins un troisième tube dont le volume interne est compris entre 10 et 20 mL, de préférence de l'ordre de 14 mL.

Par ailleurs, les tubes peuvent être aptes à être montés dans des orifices ou des logements du support de l'appareil, les orifices ou les logements étant situés le long d'une même circonférence centrée sur l'axe du support.

Dans ce cas, le support peut comporter au moins deux logements ou orifices de diamètres différents.

Au moins deux logements ou orifices de diamètres différents peuvent être juxtaposés, au moins en partie.

De préférence, le support peut comporter une partie fixe et au moins une partie amovible par rapport à la partie fixe, les tubes étant aptes à être maintenus solidaires de la partie amovible afin de pouvoir être montés ou extraits de la partie fixe par montage ou retrait de la partie amovible par rapport à la partie fixe.

Une telle caractéristique permet de retirer ou de mettre en place facilement l'ensemble des tubes.

Le support peut comporter une première et une deuxième parties amovibles, chacune étant destinée au support de plusieurs tubes identiques, la première partie amovible permettant le support de certains tubes et la seconde partie amovible permettant le support de tubes différents.

Le dispositif de broyage peut également comporter un organe de verrouillage comportant au moins une patte de verrouillage apte à venir en appui sur une extrémité d'un tube monté sur le support, en position de verrouillage de l'organe de verrouillage, de manière à maintenir une surface d'appui du tube contre le support.

Chaque tube peut par exemple comporter une collerette formant une surface d'appui du tube, la patte de verrouillage appuyant sur une extrémité du tube, par exemple sur un capuchon du tube, afin de maintenir la collerette en appui sur le support.

Dans ce cas, le dispositif de broyage peut comporter des moyens d'aspiration aptes à maintenir l'organe de verrouillage dans sa position de verrouillage. Lorsque les moyens d'aspiration sont activés, alors l'organe de verrouillage est en position verrouillée. A l'inverse, lorsque les moyens d'aspiration sont désactivés, alors l'organe de verrouillage peut être déverrouillé et retiré du support. On facilite ainsi le verrouillage ou le déverrouillage de l'organe de verrouillage.

Le dispositif de broyage peut comporter un bâti fixe sur lequel le support est monté déplaçable, un capot étant monté sur le bâti et définissant avec ledit bâti au moins une enceinte dans laquelle sont logés le support et les tubes montés sur le support, le dispositif de broyage comportant en outre des moyens d'amenée d'air froid à l'intérieur de ladite enceinte.

Dans ce cas, le capot peut comporter une paroi interne et une paroi externe entre lesquelles est ménagé un volume d'isolation thermique. Chaque paroi peut présenter une forme de cloche ouverte en direction du bâti.

En outre, le volume d'isolation thermique peut contenir un gaz, tel par exemple que de l'air.

Par ailleurs, le capot ou le bâti peut comporter un joint assurant au moins partiellement l'étanchéité à l'interface entre le capot et le bâti, ladite interface comportant au moins une zone dépourvue de joint de façon à permettre la sortie d'un flux d'air hors de l'enceinte.

Enfin, les moyens d'amenée d'air peuvent comporter une buse d'entrée d'air monté sur le capot, ladite buse débouchant dans l'enceinte.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un dispositif de broyage d'un ensemble selon l'invention,
- la figure 2 est une vue schématique, de côté, illustrant les deux positions extrêmes du support et d'un tube monté sur le support,
- la figure 3 est une vue en coupe axiale d'un tube,
- la figure 4 est une vue en perspective, de dessus, d'un capot selon l'invention,
- la figure 5 est une vue en coupe axiale du capot de la figure 4,
- la figure 6 est une vue en perspective d'une partie du dispositif de broyage illustrant en particulier la partie fixe du support,
- la figure 7 est une vue correspondant à la figure 6 dans laquelle une première partie amovible destinée à supporter un premier type de tubes est monté sur la partie fixe du support,
- la figure 8 est une vue correspondant à la figure 7, dans laquelle les premier tubes sont montés dans la première partie amovible et dans la première partie fixe,

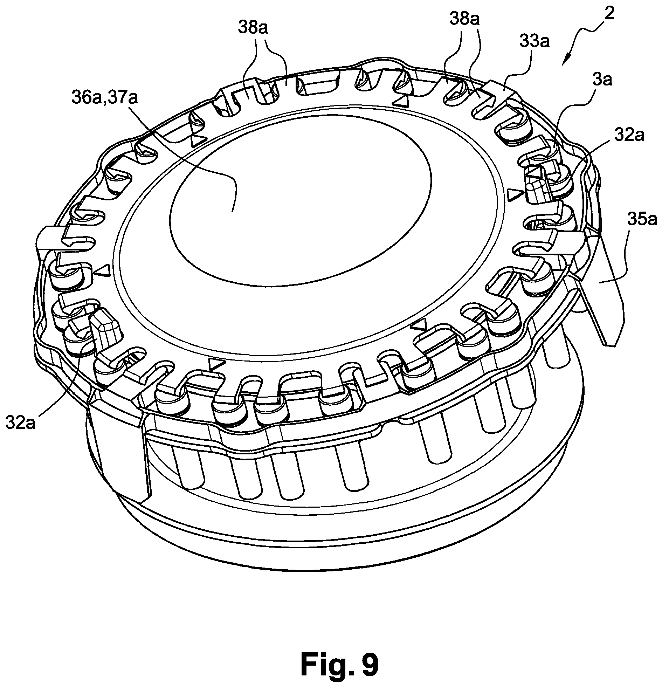

- la figure 9 est une vue correspondant à la figure 8, dans laquelle un premier organe de verrouillage est monté sur la première partie amovible et est dans sa position de verrouillage,
- les figures 10 à 12 sont des vues correspondant respectivement aux figures 7 à 9, illustrant l'utilisation d'une deuxième partie amovible du support, d'un deuxième type de tubes et d'un deuxième organe de verrouillage,
- les figures 13 à 15 sont des vues correspondant respectivement aux figures 7 à 9, illustrant l'utilisation d'une troisième partie amovible du support, d'un troisième type de tubes et d'un troisième organe de verrouillage,
- la figure 16 est un diagramme représentant l'évolution de l'efficacité du broyage en fonction du rapport d/h précité, pour plusieurs débattements d.

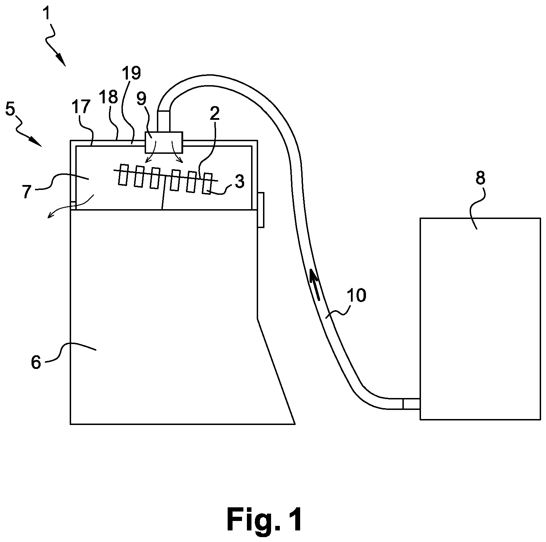

La figure 1 représente un dispositif de broyage 1 qui est similaire à celui décrit dans le document FR-A-2 872 233 et comprend essentiellement un support 2 portant des tubes 3 à sa périphérie et monté en bout d'un arbre 4 entraîné de façon à effectuer un mouvement de précession.

L'arbre 4 est supporté et centré sur une partie élastiquement suspendue du dispositif 1 au moyen d'un système de paliers concentriques montés les uns à l'intérieur des autres, comprenant un palier à rotule et à billes porté par l'arbre et tournant à l'intérieur de deux roulements à billes axialement superposés comme décrit dans le document FR-A-2 872 233.

Le dispositif 1 comprend encore un capot 5 porté par un bâti ou une carrosserie fixe 6, le capot 5 pouvant pivoter entre une position ouverte dans laquelle il libère l'accès au support 2, en particulier en vue de la mise en place des tubes 3 sur le support 2 ou du retrait desdits tubes 3, et une position fermée dans laquelle le capot 5 définit avec ledit bâti 6 une enceinte 7 dans laquelle sont logés le support 2 et les tubes 3 montés sur le support 2, en vue du broyage des échantillons contenus dans les tubes 3. Des moyens de verrouillage permettent de maintenir le capot 5 dans la position fermée représentée en figure 1 pendant le broyage des échantillons.

Pour éviter que les échantillons contenus dans les tubes 3 soient portés pendant leur broyage à une température élevée par des microbilles de verre, de céramique ou toute autre matière appropriée contenues dans les tubes, le dispositif de broyage 1 comporte en outre des moyens d'amenée d'air froid à l'intérieur de ladite enceinte 7. Ces moyens comportent notamment une unité 8 de production d'air froid reliée à une buse 9 d'injection d'air froid à l'intérieur de l'enceinte 7, par l'intermédiaire d'une conduite 10 isolée thermiquement, par exemple à l'aide d'une gaine externe.

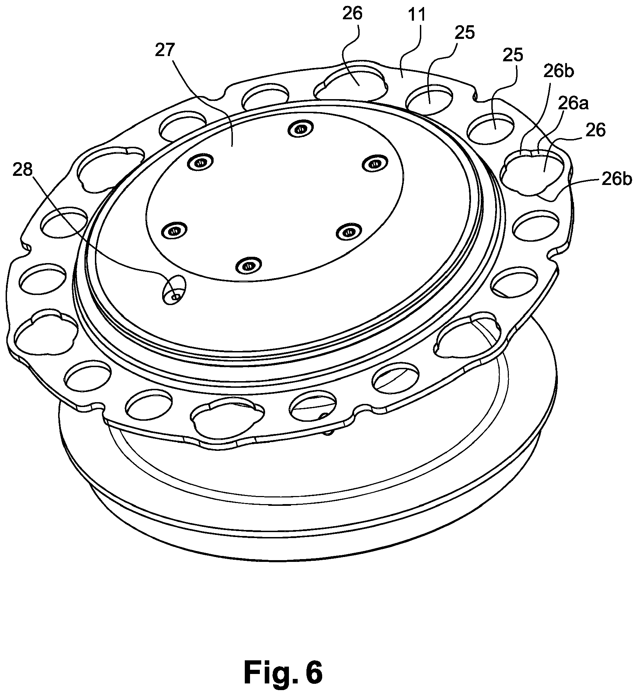

Le support 2 comporte plus particulièrement une partie fixe 11 (voir notamment figure 6) formant un plateau circulaire, à partir duquel un arbre 4 s'étend radialement à partir du centre dudit plateau 11, l'arbre 4 s'étendant selon l'axe X du support 2 et du plateau 11.

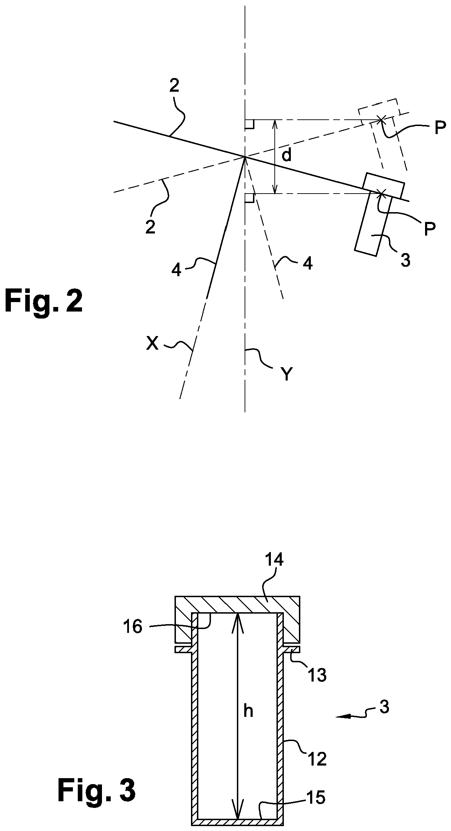

La figure 2 représente les positions extrêmes du support 2 lors de son mouvement de précession. Lors d'un tel mouvement, la rotation du support 2 autour de son axe X est empêchée ou limitée. Cependant, lors d'un tel mouvement de précession, l'arbre 4 ou l'axe X du support 2 se déplace de façon cyclique le long d'un cône d'axe Y. Dans la forme de réalisation représentée aux figures, l'axe Y est horizontal mais il pourrait également être incliné par rapport à l'horizontale.

Si l'on considère un point P du tube 3, on désigne par débattement d la projection, sur l'axe Y dudit cône, de la distance entre lesdites positions extrêmes du point P du tube 3.

La figure 3 représente une forme de réalisation d'un tube 3 pouvant être utilisé, celui-ci comportant un corps creux 12 sensiblement cylindrique, débouchant à une extrémité et comportant une collerette 13 s'étendant radialement vers l'extérieur du côté de l'extrémité débouchante et située axialement en retrait par rapport à ladite extrémité débouchante.

Un capuchon 14 est en outre vissé sur ladite extrémité débouchante. On désigne par h la hauteur du volume interne cylindrique du tube 3, c'est-à-dire la dimension axiale dudit volume interne, de la paroi de fond 15 du tube 3 jusqu'à la paroi de fond 16 du capuchon 14.

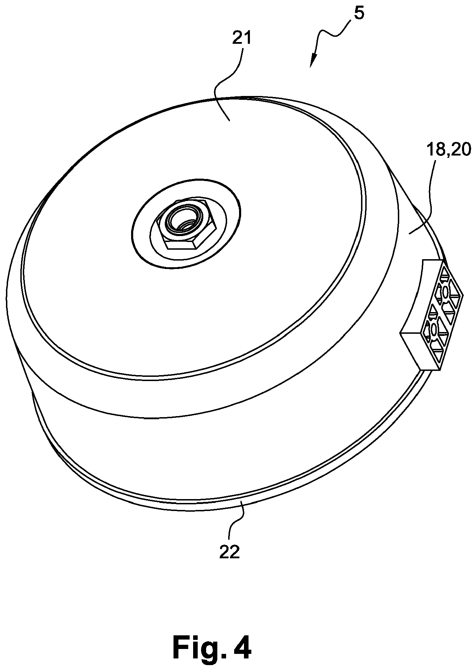

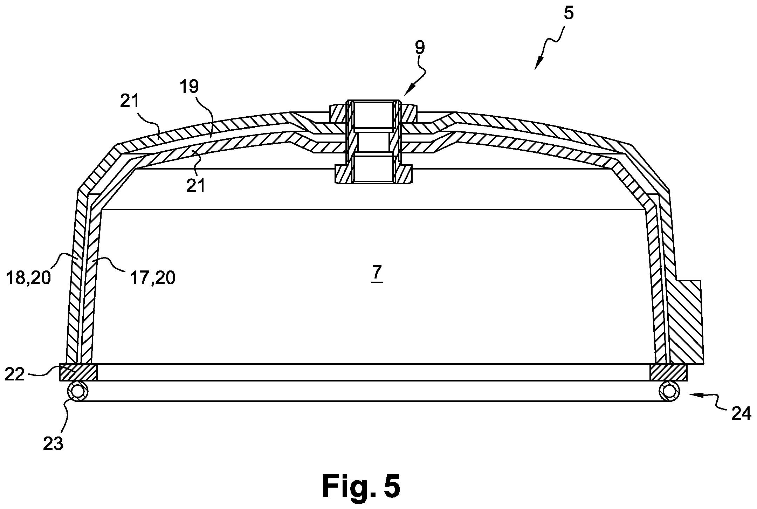

Les figures 4 et 5 représentent une forme de réalisation du capot 5, celui-ci comportant des parois interne et externe 17, 18 en forme de cloches, montées de façon concentrique l'une dans l'autre et délimitant entre elles un volume d'isolation fermé 19 rempli d'un gaz tel par exemple que de l'air.

En particulier, chaque paroi 17, 18 comporte une surface annulaire latérale 20, sensiblement cylindrique ou tronconique, et une surface de fond 21 s'étendant globalement radialement ou pouvant être bombée ou creusée. Les extrémités libres des surfaces latérales 20 des deux parois 17, 18 sont reliées l'une à l'autre de façon étanche et forment un bord dit inférieur 22.

La buse 9 d'injection d'air froid est située au centre des surfaces de fond 21 et traverse les parois interne 17 et externe 18, ladite buse 9 étant apte à injecter de l'air de façon homogène ou multidirectionnelle dans l'enceinte 7.

Un joint d'étanchéité 23 (figure 5) s'étend le long de la quasi-totalité du bord inférieur 22. En position fermée du capot 5, le bord inférieur 22 et le joint d'étanchéité 23 viennent s'appuyer sur une zone d'appui du bâti fixe 6. Le bord inférieur 22 comporte une zone 24 dépourvue de joint 23 de façon à permettre la sortie d'un flux d'air hors de l'enceinte 7.

La figure 6 représente la partie fixe ou plateau 11 du support 2, ladite partie fixe 11 comportant des orifices en périphérie externe. Plus particulièrement, la partie fixe comporte douze orifices 25 d'un premier diamètre et six orifices 26 dont la section a un profil particulier. En effet, les orifices 26 sont formés par la juxtaposition ou superposition d'une ouverture circulaire centrale 26a d'un second diamètre et de deux ouvertures circulaires latérales 26b d'un troisième diamètre. Chaque orifice 26 comporte ainsi une partie centrale 26a et deux parties latérales 26b.

Deux orifices 25 sont intercalés à chaque fois circonférentiellement entre deux orifices 26, les différents orifices 25, 26 étant décalés les uns des autres et régulièrement répartis sur toute la circonférence, sensiblement sur un même diamètre. La partie centrale 27 de la partie fixe 11 du support 2 comporte une buse d'aspiration 28 reliée à une pompe d'aspiration commandée non représentée, logée dans le bâti 6.

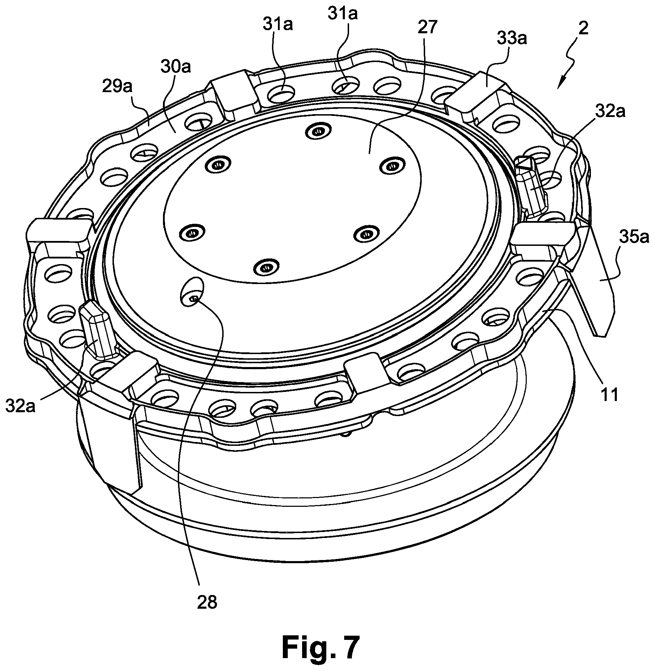

La figure 7 illustre le positionnement d'une première partie 29a du support 2 sur la partie fixe 11. La première partie amovible 29a est annulaire et comporte une surface radiale 30a dans laquelle sont ménagés des orifices 31a, au nombre de 24 et d'un diamètre correspondant sensiblement au diamètre du corps d'un premier type de tubes 3a, à savoir des tubes 3a d'un volume compris entre 1 et 5 mL, de préférence de l'ordre de 2 mL.

La première partie amovible 29a comporte en outre :
- des moyens permettant de positionner angulairement la première partie amovible 29a par rapport à la partie fixe 11,
- des plots de détrompage 32a s'étendant vers le haut et/ou vers le bas,
- six plots d'appui 33a s'étendant vers le haut, servant à l'appui d'un organe de verrouillage et régulièrement répartis sur la circonférence, entre des orifices 31a,
- quatre languettes 35a s'étendant vers le bas, régulièrement réparties sur la circonférence et servant à l'appui sur une surface telle qu'un plan de travail.

Les orifices 31a de la première partie amovible 29a sont disposés en regard des orifices 25 et des parties latérales 26b des orifices 26.

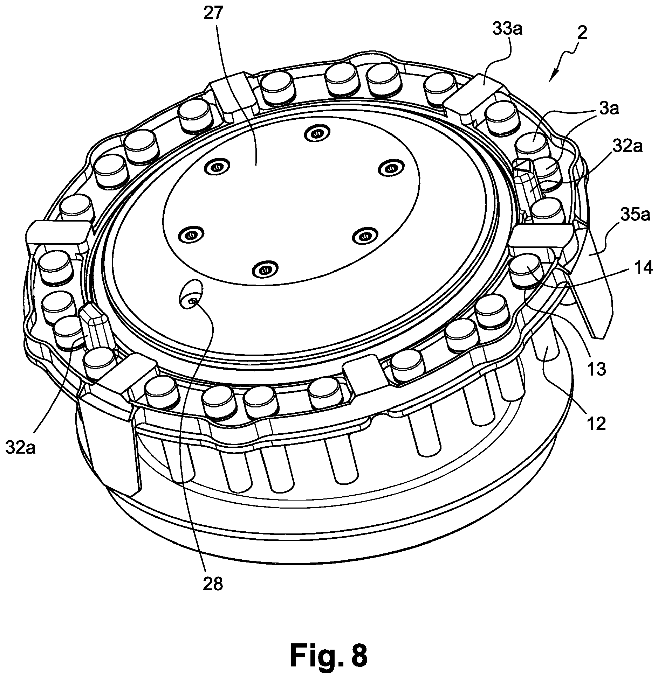

La figure 8 représente les tubes du premier type 3a montés sur le support 2, en particulier à l'intérieur des orifices correspondants 25, 26, 31a de la partie amovible 29a et de la partie fixe 11.

En particulier, le montage peut être réalisé de la manière suivante.

Tout d'abord, la première partie mobile 29a peut être posée sur une surface horizontale, de façon à ce que les extrémités libres des languettes 35a reposent sur ladite surface. Les corps 12 des tubes 3a peuvent ensuite être engagés dans les orifices 25, 26, 31a, jusqu'à ce que les collerettes 13 reposent sur la surface radiale 30a. La hauteur des languettes 35a est adaptée de manière à ce que les tubes 3a soient suspendus par leurs collerettes 13 lors de cette étape.

L'ensemble formé par la première partie mobile 29a et les tubes 3a du premier type peut ensuite être monté sur la partie fixe 11 du support 2, dans la position illustrée à la figure 8.

Un premier organe de verrouillage 36a est ensuite positionné sur la première partie amovible 29a et sur les tubes 3a. Plus particulièrement, le premier organe de verrouillage 36a comporte une partie centrale circulaire 37a à partir de laquelle des pattes 38a s'étendent radialement vers l'extérieur. Certaines des pattes 38a délimitent entre elles des encoches de plus grande largeur, servant à l'introduction des plots de détrompage 32a. De cette façon, après positionnement du premier organe de verrouillage 36a, on s'assure que les pattes 38a soient situées en regard des tubes 3a, plus particulièrement en regard des capuchons 14 des tubes 3a.

La partie centrale 37a du premier organe de verrouillage 36a est située en regard de la partie centrale 27 de la partie fixe 11 du support 2, et plus particulièrement en regard de la buse d'aspiration 28. De cette manière, une fois que le premier organe de verrouillage 36a est en position, la pompe d'aspiration peut être démarrée, ce qui a pour effet de plaquer les pattes 38a du premier organe de verrouillage 36a sur les capuchons 14 des tubes 3a afin que les tubes 3a soient maintenus en appui par leurs collerettes 14 sur la surface radiale 30a. Dans ce cas également, certaines des pattes 38a de l'organe de verrouillage 36a viennent en appui sur les plots 33a, de manière à verrouiller la partie amovible 29a du support 2. On maintient ainsi efficacement les tubes 3a en position lors du mouvement de précession du support 2, sans risque de dégradation des tubes 3a.

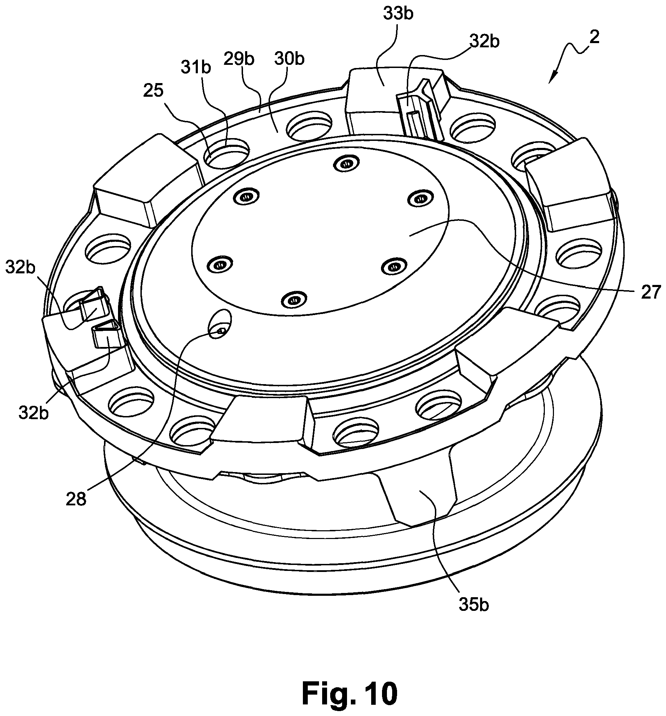

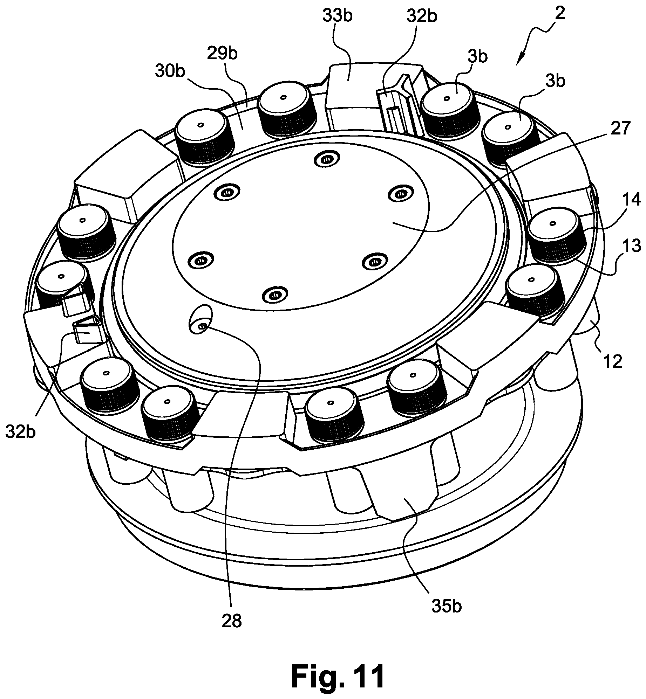

Les figures 10 à 12 illustrent le montage d'un second type de tubes 3b, à savoir des tubes 3b d'un volume compris entre 5 et 10 mL, de préférence de l'ordre de 7 mL, à l'aide d'une deuxième partie mobile 29b du support 2 et d'un deuxième organe de verrouillage 36b.

La deuxième partie mobile 29b diffère de la première partie mobile 29a par le nombre et la taille des orifices 31b. La deuxième partie mobile 29b comporte ainsi 12 orifices 31b, le diamètre des orifices 31b étant adapté au diamètre externe du corps 12 des tubes 3b du second type. Dans la position représentée à la figure 10, les orifices 31b de la deuxième partie mobile 29b sont disposés en regard des orifices 25 de la partie fixe 11 et ont le même diamètre que ces derniers.

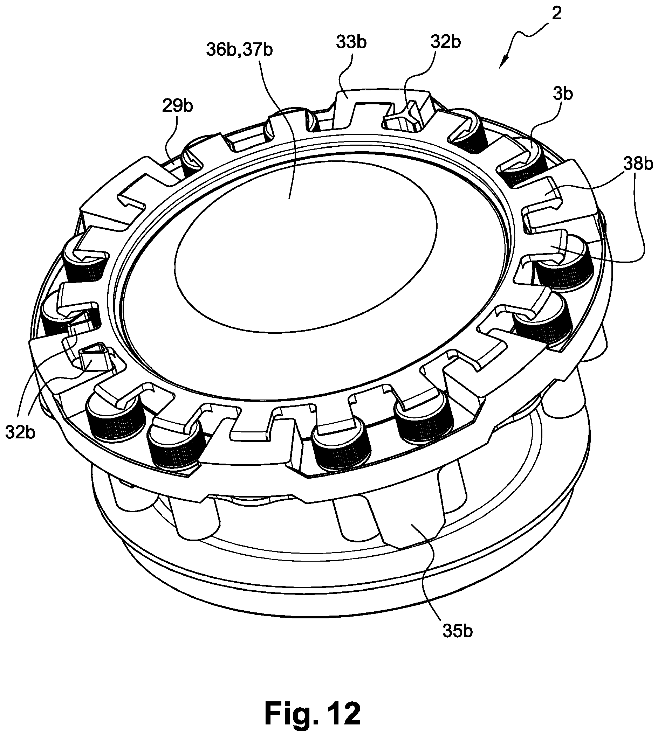

Les positions des pattes 38b du deuxième organe de verrouillage 36b sont donc adaptées en conséquence, afin d'être situées en regard des tubes 3b du second type et des plots 33b du deuxième organe amovible 29b, dans la position illustrée à la figure 12.

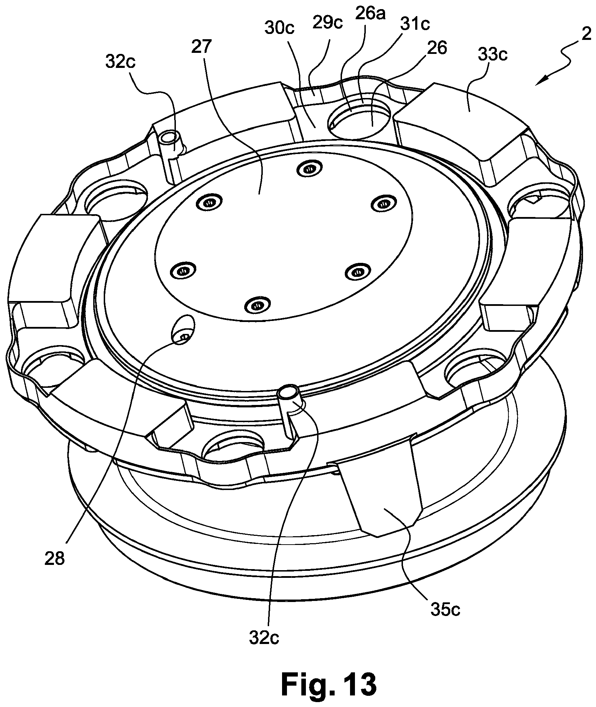

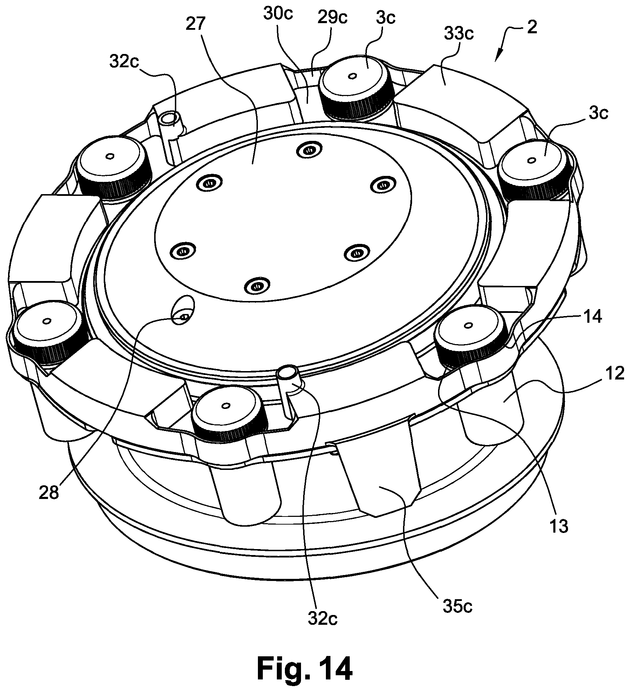

Les figures 13 à 15 illustrent le montage d'un troisième type de tubes 3c, à savoir des tubes d'un volume compris entre 10 et 20 mL, de préférence de l'ordre de 14 mL, à l'aide d'une troisième partie mobile 29c du support 2 et d'un troisième organe de verrouillage 36c.

La troisième partie mobile 29c diffère de la première partie mobile 29a par le nombre et la taille des orifices 31c. La troisième partie mobile 29c comporte ainsi 6 orifices 31c, le diamètre des orifices 31c étant adapté au diamètre externe du corps 12 des tubes 3c du troisième type. Dans la position représentée à la figure 13, les orifices 31c de la troisième partie mobile 29c sont disposés en regard des ouvertures centrales 26a des orifices 26 de la partie fixe 11.

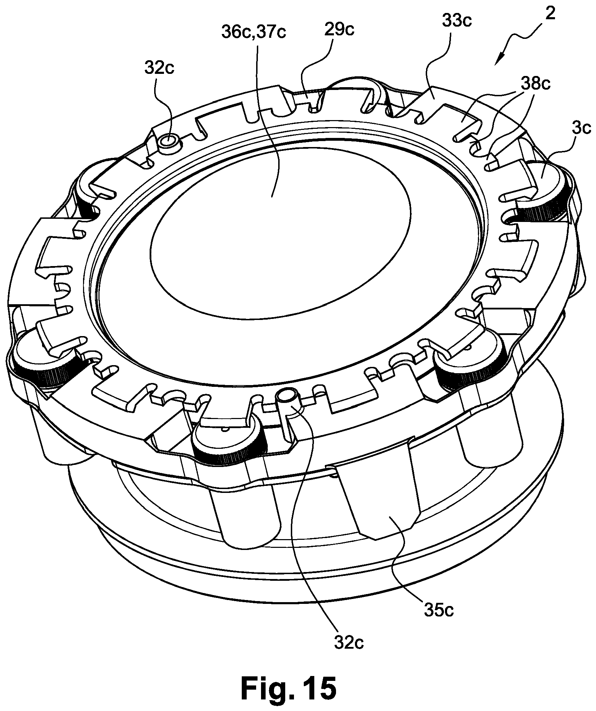

Les positions des pattes 38c du troisième organe de verrouillage 29c sont donc adaptées en conséquence, afin d'être situées en regard des tubes 3c du troisième type et des plots 33c du troisième organe amovible 36c, dans la position illustrée à la figure 15.

La demanderesse a effectué une série de test ayant pour objectif d'analyser l'influence du rapport du débattement d sur la hauteur h du tube 3 (d et h ayant été définis précédemment), noté ci-après comme le rapport d/h, sur l'efficacité du broyage.

Pour cela, l'efficacité du broyage a été évaluée visuellement. Des grains de lentilles ont été utilisés en tant qu'échantillon à broyer dans l'étude menée par la demanderesse. Plus le broyage est efficace, plus les particules d'échantillon obtenues après broyage sont fines. La note obtenue augmente avec l'efficacité du broyage et diminue donc avec la taille des particules obtenues après broyage.

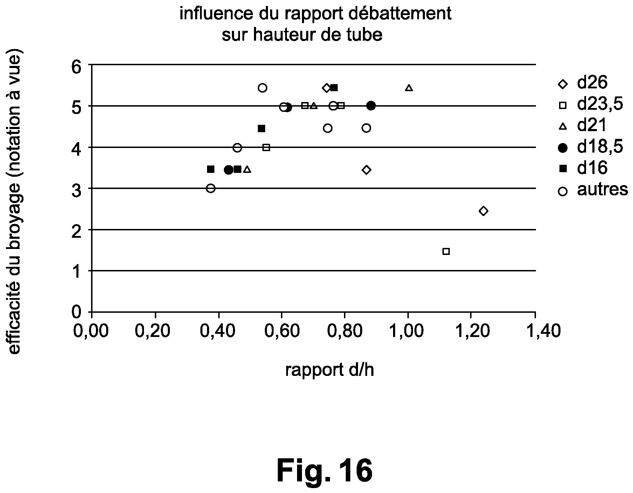

Le diagramme de la figure 16 illustre ainsi l'efficacité du broyage en fonction du rapport d/h, chaque point du diagramme étant le résultat d'un test. Les différents tests ont été réalisés en maintenant les paramètres autres que le rapport d/h sensiblement identiques (taille et matériau des billes, matériau du tube 3, température, vitesse de déplacement du support 2, etc...).

Plusieurs débattements ont été étudiés, à savoir notamment un débattement d de 26 mm (points référencés d26 sur le diagramme), un débattement d de 23,5 mm (points référencés d23), un débattement d de 21 mm (points référencés d21), un débattement d de 18,5 mm (points référencés d18,5) et un débattement d de 16 mm (points référencés d16).

Il ressort de cette étude qu'une efficacité maximale est obtenue lorsque le rapport d/h est compris entre 0,55 et 1, de préférence entre 0,6 et 0,8 encore plus préférentiellement compris entre 0,6 et 0,7. L'efficacité de broyage est réduite de façon très importante en dehors des plages de valeurs précitées.

On notera que l'efficacité est relativement constante sur un plateau situé entre 0,6 et 1. De préférence, on choisit de se placer au début du plateau, c'est-à-dire au débattement minimum (et donc au rapport d/h minimum permettant de fournir l'efficacité maximale), à savoir proche de 0,6. De cette manière, on réduit l'énergie nécessaire au broyage des échantillons et on évite toute dégradation des tubes et de l'appareil.

Pour un même débattement et pour des orifices et des tubes 3 situés sur une même circonférence, il convient donc d'utiliser des types de tubes 3a, 3b, 3c ayant une même hauteur h.

## Revendications

1. Ensemble pour le broyage d'échantillons biologiques, comportant au moins deux tubes (3), aptes à être montés sur un support (2) d'un dispositif de broyage (1), chaque tube (3) comportant un espace interne ayant une hauteur (h) selon l'axe du tube (3) correspondant et étant destiné à contenir des échantillons à broyer, **caractérisé en ce que** lesdits au moins deux tubes (3) sont de volumes différents et **en ce qu'**il comporte un dispositif de broyage (1) comprenant un support (2) apte à supporter lesdits au moins deux tubes différents (3, 3a, 3b, 3c), des moyens d'entraînement du support (2) en mouvement de précession, le support (2) présentant un axe (4, X) dont la position varie en décrivant un cône, chaque tube (3) étant soumis à un débattement (d) défini par la projection, sur l'axe (Y) dudit cône, de la distance entre les positions extrêmes d'un même point (P) du tube (3) lors du mouvement de précession, le dispositif de broyage (1) et les tubes (3) étant conçus de façon à ce que, pour chaque tube, le rapport d/h soit compris entre 0,55 et 1, de préférence entre 0,6 et 0,8 encore plus préférentiellement compris entre 0,6 et 0,7.

2. Ensemble selon la revendication 1, **caractérisé en ce que** lesdits au moins deux tubes comprennent au moins un premier tube (3a) dont le volume interne est compris entre 1 et 5 ml, de préférence de l'ordre de 2 ml.

3. Ensemble selon la revendication 1 ou 2, **caractérisé en ce que** lesdits au moins deux tubes comprennent au moins un deuxième tube (3b) dont le volume interne est compris entre 5 et 10 ml, de préférence de l'ordre de 7 ml.

4. Ensemble selon l'une des revendications 1 à 3, **caractérisé en ce que** lesdits au moins deux tubes comprennent au moins un troisième tube (3c) dont le volume interne est compris entre 10 et 20 ml, de préférence de l'ordre de 14 ml.

5. Ensemble selon l'une des revendications 1 à 4, **caractérisé en ce que** les tubes (3) sont aptes à être montés dans des orifices (25, 26, 31a, 31b, 31c) ou des logements du support (2) de l'appareil (1), les orifices ou les logements étant situés le long d'une même circonférence centrée sur l'axe (X) du support (2).

6. Ensemble selon la revendication 5, **caractérisé en ce que** le support (2) comporte au moins deux logements ou orifices (25, 26, 31 a, 31b, 31c) de diamètres différents.

7. Ensemble selon la revendication 6, **caractérisé en ce qu'**au moins deux logements ou orifices (26a, 26b) de diamètres différents sont juxtaposés, au moins en partie.

8. Ensemble selon l'une des revendications 1 à 6, **caractérisé en ce que** le support (2) comporte une partie fixe (11) et au moins une partie amovible (29a, 29b, 29c) par rapport à la partie fixe (11), les tubes (3) étant aptes à être maintenus solidaires de la partie amovible (29a, 29b, 29c) afin de pouvoir être montés ou extraits de la partie fixe (11) par montage ou retrait de la partie amovible (29a, 29b, 29c) par rapport à la partie fixe (11).

9. Ensemble selon la revendication 8, **caractérisé en ce que** ladite au moins une partie amovible du support (2) comporte une première et une deuxième parties amovibles (29a, 29b, 29c), chacune étant destinée au support de plusieurs tubes identiques (3a, 3b, 3c), la première partie amovible (29a) permettant le support de certains tubes (3a) et la seconde partie amovible (29b) permettant le support de tubes (3b) différents.

10. Ensemble selon l'une des revendications 1 à 9, **caractérisé en ce que** le dispositif de broyage (1) comporte un organe de verrouillage (36a, 36b, 36c) comportant au moins une patte de verrouillage (38a, 38b, 38c) apte à venir en appui sur une extrémité (14) d'un tube (3) monté sur le support (2), en position de verrouillage de l'organe de verrouillage (36a, 36b, 36c), de manière à maintenir une surface d'appui (14) du tube (3) contre le support (2).

11. Ensemble selon la revendication 10, **caractérisé en ce que** le dispositif de broyage (1) comporte des moyens d'aspiration (28) aptes à maintenir l'organe de verrouillage (36a, 36b, 36c) dans sa position de verrouillage.

12. Ensemble selon l'une des revendications 1 à 11, **caractérisé en ce que** le dispositif de broyage (1) comporte un bâti fixe (6) sur lequel le support (2) est monté déplaçable, un capot (5) étant monté sur le bâti (6) et définissant avec ledit bâti (6) au moins une enceinte (7) dans laquelle sont logés le support (2) et les tubes (3) montés sur le support (2), le dispositif de broyage (1) comportant en outre des moyens d'amenée d'air froid (8, 9, 10) à l'intérieur de ladite enceinte (7).

13. Ensemble selon la revendication 12, **caractérisé en ce que** le capot (5) comporte une paroi interne (17) et une paroi externe (18) entre lesquelles est ménagé un volume d'isolation thermique (19).

14. Ensemble selon la revendication 13, **caractérisé en ce que** le volume d'isolation thermique (19) contient un gaz, tel par exemple que de l'air.

15. Ensemble selon l'une des revendications 12 à 14, **caractérisé en ce que** le capot (5) ou le bâti (6) comporte un joint (23) assurant au moins partiellement l'étanchéité à l'interface entre le capot (5) et le bâti (6), ladite interface comportant au moins une zone dépourvue de joint de façon à permettre la sortie d'un flux d'air hors de l'enceinte.

16. Ensemble selon l'une des revendications 12 à 15, **caractérisé en ce que** les moyens d'amenée d'air comportent une buse d'entrée d'air (9) monté sur le capot (5), ladite buse (9) débouchant dans l'enceinte (7).

## Patentansprüche

1. Einheit zum Zerkleinern von biologischen Proben, die mindestens zwei Rohre (3) umfasst, die an einem Halter (2) einer Zerkleinerungsvorrichtung (1) angebracht werden können, wobei jedes Rohr (3) einen Innenraum umfasst, der eine Höhe (h) entlang der Achse des entsprechenden Rohrs (3) aufweist und dazu bestimmt ist, Proben zu enthalten, die zerkleinert werden sollen, **dadurch gekennzeichnet, dass** die mindestens zwei Rohre (3) unterschiedliche Volumen aufweisen, und dadurch, dass sie eine Zerkleinerungsvorrichtung (1) umfasst, die einen Halter (2) umfasst, der die mindestens zwei unterschiedlichen Rohre (3, 3a, 3b, 3c) halten kann, Mittel zum Antreiben des Halters (2) in Präzessionsbewegung, wobei der Halter (2) eine Achse (4, X) aufweist, deren Position unter Beschreiben eines Kegels variiert, wobei jedes Rohr (3) einer Auslenkung (d) unterliegt, die von der Projektion des Abstands zwischen den Extrempositionen ein und desselben Punkts (P) des Rohrs (3) bei der Präzessionsbewegung auf die Achse (Y) des Kegels definiert wird, wobei die Zerkleinerungsvorrichtung (1) und die Rohre (3) so konzipiert sind, dass bei jedem Rohr das Verhältnis d/h im Bereich zwischen 0,55 und 1, vorzugsweise zwischen 0,6 und 0,8, noch stärker bevorzugt im Bereich zwischen 0,6 und 0,7 liegt.

2. Einheit nach Anspruch 1, **dadurch gekennzeichnet, dass** die mindestens zwei Rohre mindestens ein erstes Rohr (3a) umfassen, dessen Innenvolumen im Bereich zwischen 1 und 5 ml, vorzugweise in der Größenordnung von 2 ml liegt.

3. Einheit nach Anspruch 1 oder 2, **dadurch gekennzeichnet, dass** die mindestens zwei Rohre mindestens ein zweites Rohr (3b) umfassen, dessen Innenvolumen im Bereich zwischen 5 und 10 ml, vorzugsweise in der Größenordnung von 7 ml liegt.

4. Einheit nach einem der Ansprüche 1 bis 3, **dadurch gekennzeichnet, dass** die mindestens zwei Rohre mindestens ein drittes Rohr (3c) umfassen, dessen Innenvolumen im Bereich zwischen 10 und 20 ml, vorzugsweis ein der Größenordnung von 14 ml liegt.

5. Einheit nach einem der Ansprüche 1 bis 4, **dadurch gekennzeichnet, dass** die Rohre (3) in Öffnungen (25, 26, 31 a, 31 b, 31 c) oder Aufnahmen des Halters (2) des Geräts (1) angebracht werden können, wobei die Öffnungen oder die Aufnahmen entlang ein und desselben Umfangs liegen, der auf der Achse (X) des Halters (2) zentriert ist.

6. Einheit nach Anspruch 5, **dadurch gekennzeichnet, dass** der Halter (2) mindestens zwei Aufnahmen oder Öffnungen (25, 26, 31 a, 31 b, 31 c) von unterschiedlichen Durchmessern umfasst.

7. Einheit nach Anspruch 6, **dadurch gekennzeichnet, dass** mindestens zwei Aufnahmen oder Öffnungen (26a, 26b) von unterschiedlichen Durchmessern mindestens zum Teil nebeneinanderliegen.

8. Einheit nach einem der Ansprüche 1 bis 6, **dadurch gekennzeichnet, dass** der Halter (2) einen festen Teil (11) und mindestens einen in Bezug auf den festen Teil (11) abnehmbaren Teil (29a, 29b, 29c) umfasst, wobei die Rohre (3) vom abnehmbaren Teil (29a, 29b, 29c) fest verbunden gehalten werden können, um durch Anbringen oder Entfernen des abnehmbaren Teils (29a, 29b, 29c) in Bezug auf den festen Teil (11) angebracht oder vom festen Teil (11) entfernt werden zu können.

9. Einheit nach Anspruch 8, **dadurch gekennzeichnet, dass** der mindestens eine abnehmbare Teil des Halters (2) einen ersten und einen zweiten abnehmbaren Teil (29a, 29b, 29c) umfasst, wobei jeder zum Halten von mehreren identischen Rohren (3a, 3b, 3c) bestimmt ist, wobei der erste abnehmbare Teil (29a) das Halten von gewissen Rohren (3a) ermöglicht, und der zweite abnehmbare Teil (29b) das Halten von unterschiedlichen Rohren (3b) ermöglicht.

10. Einheit nach einem der Ansprüche 1 bis 9, **dadurch gekennzeichnet, dass** die Zerkleinerungsvorrichtung (1) ein Verriegelungsglied (36a, 36b, 36c) umfasst, das mindestens eine Verriegelungsnase (38a, 38b, 38c) umfasst, die in Verriegelungsposition des Verriegelungsglieds (36a, 36b, 36c) an einem Ende (14) eines am Halter (2) angebrachten Rohrs (3) in Auflage gehen kann, um eine Auflagefläche (14) des Rohrs (3) an der Halterung (2) festzuhalten.

11. Einheit nach Anspruch 10, **dadurch gekennzeichnet, dass** die Zerkleinerungsvorrichtung (1) Ansaugmittel (28) umfasst, die das Verriegelungsglied (36a, 36b, 36c) in seiner Verriegelungsposition festhalten können.

12. Einheit nach einem der Ansprüche 1 bis 11, **dadurch gekennzeichnet, dass** die Zerkleinerungsvorrichtung (1) einen festen Unterbau (6) umfasst, auf dem der Halter (2) beweglich angebracht ist, wobei eine Abdeckung (5) auf dem Unterbau (6) angebracht ist und mit dem Unterbau (6) mindestens eine Kammer (7) bildet, in der der Halter (2) und die am Halter (2) angebrachten Rohre (3) aufgenommen sind, wobei die Zerkleinerungsvorrichtung (1) weiter Mittel zum Zuführen von kalter Luft (8, 9, 10) in das Innere der Kammer (7) umfasst.

13. Einheit nach Anspruch 12, **dadurch gekennzeichnet, dass** die Abdeckung (5) eine Innenwand (17) und eine Außenwand (18) umfasst, zwischen denen ein Wärmedämmvolumen (19) ausgestaltet ist.

14. Einheit nach Anspruch 13, **dadurch gekennzeichnet, dass** das Wärmedämmvolumen (19) ein Gas, wie zum Beispiel Luft enthält.

15. Einheit nach einem der Ansprüche 12 bis 14, **dadurch gekennzeichnet, dass** die Abdeckung (5) oder der Unterbau (6) eine Dichtung (23) umfasst, die mindestens teilweise die Dichtigkeit an der Grenzfläche zwischen der Abdeckung (5) und dem Unterbau (6) sicherstellt, wobei die Grenzfläche mindestens einen dichtungsfreien Bereich umfasst, um das Austreten eines Luftstroms aus der Kammer zu ermöglichen.

16. Einheit nach einem der Ansprüche 12 bis 15, **dadurch gekennzeichnet, dass** die Luftzuführmittel eine Lufteinlassdüse (9) umfassen, die an der Abdeckung (5) angebracht ist, wobei die Düse (9) in der Kammer (7) mündet.

## Claims

1. Assembly for grinding biological samples, comprising at least two tubes (3), capable of being mounted on a support (2) of the grinding device (1), each tube (3) comprising an inner space having a height (h) about the axis of the corresponding tube (3) and being intended to contain samples to be grinded, **characterised in that** said at least two tubes (3) are of different volumes and **in that** it comprises a grinding device (1) comprising a support (2) capable of supporting said at least two different tubes (3, 3a, 3b, 3c), means for driving the support (2) in a precession movement, the support (2) having an axis (4, X) of which the position varies by describing a cone, each tube (3) being subjected to an articulation (d) defined by the projection, on the axis (Y) of said cone, of the distance between the extreme positions of one same point (P) of the tube (3) during the precession movement, the grinding device (1) and the tubes (3) being designed such that, for each tube, the d/h ratio is between 0.55 and 1, preferably between 0.6 and 0.8, even more preferably between 0.6 and 0.7.

2. Assembly according to claim 1, **characterised in that** said at least two tubes comprise at least one first tube (3a) of which the inner volume is between 1 and 5ml, preferably around 2ml.

3. Assembly according to claim 1 or 2, **characterised in that** said at least two tubes comprise at least one second tube (3b) of which the inner volume is between 5 and 10ml, preferably around 7ml.

4. Assembly according to one of claims 1 to 3, **characterised in that** said at least two tubes comprise at least one third tube (3c) of which the inner volume is between 10 and 20ml, preferably around 14ml.

5. Assembly according to one of claims 1 to 4, **characterised in that** the tubes (3) are capable of being mounted in orifices (25, 26, 31a, 31b, 31c) or housings of the support (2) of the appliance (1), the orifices or the housings being located along one same circumference centred on the axis (X) of the support (2).

6. Assembly according to claim 5, **characterised in that** the support (2) comprises at least two housings or orifices (25, 26, 31a, 31b, 31c) of different diameters.

7. Assembly according to claim 6, **characterised in that** at least two housings or orifices (26a, 26b) of different diameters are juxtaposed, at least partially.

8. Assembly according to one of claims 1 to 6, **characterised in that** the support (2) comprises a fixed portion (11) and at least one removable portion (29a, 29b, 29c) with respect to the fixed portion (11), the tubes (3) being capable of being held secured to the removable portion (29a, 29b, 29c) in order to be able to be mounted or removed from the fixed portion (11) by mounting or removing the removable portion (29a, 29b, 29c) with respect to the fixed portion (11).

9. Assembly according to claim 8, **characterised in that** said at least one removable portion of the support (2) comprises a first and a second removable portion (29a, 29b, 29c), each being intended to support several identical tubes (3a, 3b, 3c), the first removable portion (29a) making it possible to support certain tubes (3a) and the second removable portion (29b) making it possible to support different tubes (3b).

10. Assembly according to one of claims 1 to 9, **characterised in that** the grinding device (1) comprises a locking member (36a, 36b, 36c) comprising at least one locking tab (38a, 38b, 38c) capable of bearing onto an end (14) of a tube (3) mounted on the support (2), in the locking position of the locking member (36a, 36b, 36c), so as to hold a bearing surface (14) of the tube (3) against the support (2).

11. Assembly according to claim 10, **characterised in that** the grinding device (1) comprises suction means (28) capable of holding the locking member (36a, 36b, 36c) in the locking position thereof.

12. Assembly according to one of claims 1 to 11, **characterised in that** the grinding device (1) comprises a fixed structure (6) on which the support (2) is mounted such that it can be moved, a cap (5) being mounted on the structure (6) and defining with said structure (6), at least one enclosure (7) wherein are housed the support (2) and the tubes (3) mounted on the support (2), the grinding device (1) further comprising cold air supply means (8, 9, 10) inside said enclosure (7).

13. Assembly according to claim 12, **characterised in that** the cap (5) comprises an inner wall (17) and an outer wall (18) between which is arranged a thermal insulation volume (19).

14. Assembly according to claim 13, **characterised in that** the thermal insulation volume (19) contains a gas, such as for example, air.

15. Assembly according to one of claims 12 to 14, **characterised in that** the cap (5) or the structure (6) comprises a seal (23) ensuring at least partially the sealing at the interface between the cap (5) and the structure (6), said interface comprising at least one zone with no seal so as to make it possible for the outflow of an airflow outside of the enclosure.

16. Assembly according to one of claims 12 to 15, **characterised in that** the air supply means comprise an air inlet nozzle (9) mounted on the cap (5), said nozzle (9) opening into the enclosure (7).
